# EUROPEAN PATENT APPLICATION

(11) **EP 4 316 710 A1**
(43) Date of publication of application: **07.02.2024**
(21) Application number: 21932908.3
(22) Date of filing: 23.03.2021
(51) Int. Cl.: B23B 51/00

(54) **DRILL HEAD, TIP-INTERCHANGEABLE DRILL, AND DRILL**

(71) Applicant: Sumitomo Electric Hardmetal Corp., Itami-shi, Hyogo 664-0016 (JP)
(72) Inventor: TAKAHASHI, Koji, Itami-shi, Hyogo 664-0016 (JP); JINDAI, Masaaki, Itami-shi, Hyogo 664-0016 (JP)
(74) Representative: Boult Wade Tennant LLP
(86) International application number: PCT/JP2021/011958
(87) International publication number: WO 2022/201298

(57) **Abstract**

A drill head is rotated about a center axis. The drill head includes: a mounting surface that is an end face in a direction of the center axis; a tip surface that is an opposite surface to the mounting surface in the direction of the center axis; an outer peripheral surface continuous to the mounting surface and the tip surface; a cutting edge extending from the outer peripheral surface toward the center axis in the tip surface; a flute that is formed on the outer peripheral surface and extends spirally around the center axis from the tip surface to the mounting surface; and a thinning surface continuous to the tip surface and the flute. The tip surface includes: a first flank surface continuous to the cutting edge; and a second flank surface located on a side opposite to the first flank surface with the flute interposed therebetween. The cutting edge includes: a main cutting edge continuous to the outer peripheral surface; and a thinning cutting edge that is continuous to the main cutting edge and is located closer to the center axis than the main cutting edge.

## Description

### TECHNICAL FIELD

The present disclosure relates to a drill head, a tip exchangeable drill, and a drill.

### BACKGROUND ART

WO 2019/049257 (PTL 1) describes a drill. The drill described in PTL 1 is rotated about an axis. The drill described in Patent Literature 1 includes an outer peripheral surface, a discharge flute, a first flank surface, a second flank surface, a cutting edge, a thinning edge, and a gash.

A discharge flute is formed on the outer peripheral surface. The discharge flute extends spirally around the axis from a tip side of the drill toward a rear end side of the drill. The discharge flute includes an inner surface facing a rotation direction side of the drill. The cutting edge is provided on a ridgeline between the inner surface of the discharge flute and the first flank surface. The second flank surface is opposite to the first flank surface with the discharge flute interposed therebetween. The thinning edge extends from the inner end of the cutting edge toward a chisel. The gash is connected to the discharge flute.

The gash includes a thinning surface continuous to the thinning edge from a side opposite to the first flank surface and a gash surface continuous to the second flank surface. The ridgeline between the gash surface and the second flank surface has an arc shape in an end face view seen along the direction of the axis from the tip side of the drill.

### CITATION LIST

### PATENT LITERATURE

PTL 1: WO 2019/049257

### SUMMARY OF INVENTION

A drill head of the present disclosure is rotated about a center axis. The drill head includes: a mounting surface that is an end face in a direction of the center axis; a tip surface that is an opposite surface to the mounting surface in the direction of the center axis; an outer peripheral surface continuous to the mounting surface and the tip surface; a cutting edge extending from the outer peripheral surface toward the center axis in the tip surface; a flute that is formed on the outer peripheral surface and extends spirally around the center axis from the tip surface to the mounting surface; and a thinning surface continuous to the tip surface and the flute. The tip surface includes: a first flank surface continuous to the cutting edge; and a second flank surface located on a side opposite to the first flank surface with the flute interposed therebetween. The cutting edge includes: a main cutting edge continuous to the outer peripheral surface; and a thinning cutting edge that is continuous to the main cutting edge and is located closer to the center axis than the main cutting edge. The main cutting edge includes: a first end that is an end on a side of the outer peripheral surface; and a second end that is an end on a side of the thinning cutting edge. The thinning surface includes: a thinning rake surface continuous to the thinning cutting edge from a side opposite to the first flank surface; and a thinning heel surface continuous to the second flank surface. A concave amount of the main cutting edge with respect to a virtual straight line connecting the first end and the second end is greater than or equal to -0.01 times and less than or equal to 0.02 times a diameter of a circumscribed circle of the drill head in an end face view viewed from a tip surface side along the direction of the center axis. A ridgeline between the thinning heel surface and the second flank surface has an arc shape having a radius of greater than or equal to 0.10 times and less than or equal to 0.30 times the diameter in the end face view.

### BRIEF DESCRIPTION OF DRAWINGS

Fig. 1 is a perspective view of a drill 100.
Fig. 2 is a perspective view of a drill head 10.
Fig. 3 is a front view of the drill head 10.
Fig. 4 is a rear view of the drill head 10.
Fig. 5 is a schematic diagram illustrating a concave amount of a main cutting edge 15a.
Fig. 6 is a schematic diagram illustrating a radial rake angle θ1 of the main cutting edge 15a.
Fig. 7 is a sectional view taken along a line VII-VII in Fig. 3.
Fig. 8 is a perspective view of a holder 20.
Fig. 9 is a front view of the holder 20.
Fig. 10 is a graph illustrating a result of a first cutting test.
Fig. 11 is a graph illustrating a result of a second cutting test.
Fig. 12 is a graph illustrating a result of a third cutting test.

### DETAILED DESCRIPTION

### [Problem to be Solved by the Present Disclosure]

In the drill described in PTL 1, the cutting edge extends in an arc shape in the end face view viewed along the direction of the axial center from the tip side of the drill. Accordingly, in the drill described in PTL 1, chips cut out of the cutting edge is curved and hardly divided.

The present disclosure has been made in view of the above-described problems of the prior art. More specifically, the present disclosure provides a drill head in which the chips are easily divided.

### [Advantageous Effect of the Present Disclosure]

According to the drill head of the present disclosure, the chips are easily divided.

### [Description of Embodiments]

First, an embodiment of the present disclosure will be listed and described.
(1) A drill head according to the embodiment is rotated about a center axis. The drill head includes: a mounting surface that is an end face in a direction of the center axis; a tip surface that is an opposite surface to the mounting surface in the direction of the center axis; an outer peripheral surface continuous to the mounting surface and the tip surface; a cutting edge extending from the outer peripheral surface toward the center axis in the tip surface; a flute that is formed on the outer peripheral surface and extends spirally around the center axis from the tip surface to the mounting surface; and a thinning surface continuous to the tip surface and the flute. The tip surface includes: a first flank surface continuous to the cutting edge; and a second flank surface located on a side opposite to the first flank surface with the flute interposed therebetween. The cutting edge includes: a main cutting edge continuous to the outer peripheral surface; and a thinning cutting edge that is continuous to the main cutting edge and is located closer to the center axis than the main cutting edge. The main cutting edge includes: a first end that is an end on a side of the outer peripheral surface; and a second end that is an end on a side of the thinning cutting edge. The thinning surface includes: a thinning rake surface continuous to the thinning cutting edge from a side opposite to the first flank surface; and a thinning heel surface continuous to the second flank surface. A concave amount of the main cutting edge with respect to a virtual straight line connecting the first end and the second end is greater than or equal to -0.01 times and less than or equal to 0.02 times a diameter of a circumscribed circle of the drill head in an end face view viewed from a tip surface side along the direction of the center axis. A ridgeline between the thinning heel surface and the second flank surface has an arc shape having a radius of greater than or equal to 0.10 times and less than or equal to 0.30 times the diameter in the end face view.

According to the drill head of (1), the chips are easily divided.

(2) In the drill head of (1), the concave amount of the main cutting edge with respect to the virtual straight line connecting the first end and the second end is greater than or equal to 0.00 times and less than or equal to 0.01 times a diameter of the drill head in the end face view viewed from the tip surface side along the direction of the center axis.

According to the drill head of (2), the chips are further easily divided, and the stability of cutting is enhanced.

(3) In the drill head of (1) or (2), the radius of the ridgeline between the arc-shaped thinning heel surface and the second flank surface may be greater than or equal to 0.13 times and less than or equal to 0.24 times the diameter of the drill head.

According to the drill head of (3), the chips are more easily divided.

(4) In the drill heads of (1) to (3), the difference between the maximum value and the minimum value of the radial rake angle of the main cutting edge may be less than or equal to 20°.

(5) In the drill heads of (1) to (4), the angle between the direction of the center axis and the thinning heel surface may be greater than or equal to 28° and less than or equal to 32°.

According to the drill head of (5), the chips are more easily divided.

(6) In the drill heads of (1) to (5), the thinning cutting edge may extend linearly in the end face view viewed from the tip surface side along the direction of the center axis.

According to the drill head of (6), the chips are more easily divided.

(7) A tip exchangeable drill according to an embodiment includes the drill heads of (1) to (6) and a holder attached to a mounting surface.

(8) The drill according to the embodiment is rotated about the center axis. The drill includes: a tip and a rear end that are ends in a direction of the center axis; a tip surface that is located at the tip; an outer peripheral surface continuous to the mounting surface and the tip surface; a cutting edge extending from the outer peripheral surface toward the center axis in the tip surface; a flute that is formed on the outer peripheral surface and extends spirally around the center axis from the tip surface toward a rear end surface; and a thinning surface continuous to the tip surface and the flute. The tip surface includes: a first flank surface continuous to the cutting edge; and a second flank surface located on a side opposite to the first flank surface with the flute interposed therebetween. The cutting edge includes: a main cutting edge continuous to the outer peripheral surface; and a thinning cutting edge that is continuous to the main cutting edge and is located closer to the center axis than the main cutting edge. The main cutting edge includes: a first end that is an end on a side of the outer peripheral surface; and a second end that is an end on a side of the thinning cutting edge. The thinning surface includes: a thinning rake surface continuous to the thinning cutting edge from a side opposite to the first flank surface; and a thinning heel surface continuous to the second flank surface. A concave amount of the main cutting edge with respect to a virtual straight line connecting the first end and the second end is greater than or equal to -0.01 times and less than or equal to 0.02 times a diameter of a circumscribed circle of the drill in an end face view viewed from a tip surface side along the direction of the center axis. A ridgeline between the thinning heel surface and the second flank surface has an arc shape having a radius of greater than or equal to 0.10 times and less than or equal to 0.30 times the diameter in the end face view.

According to the drill of (8), the chips are easily divided.
[Detailed Embodiments of the Present Disclosure] With reference to the drawings, an embodiment of the present disclosure will be described in detail. In the following drawings, the same or corresponding component is designated by the same reference numeral, and the overlapping description will be omitted.

A drill (hereinafter referred to as a "drill 100") according to an embodiment will be described. Drill 100 is a tip exchangeable drill.

### (Configuration of drill 100)

A configuration of drill 100 will be described below.

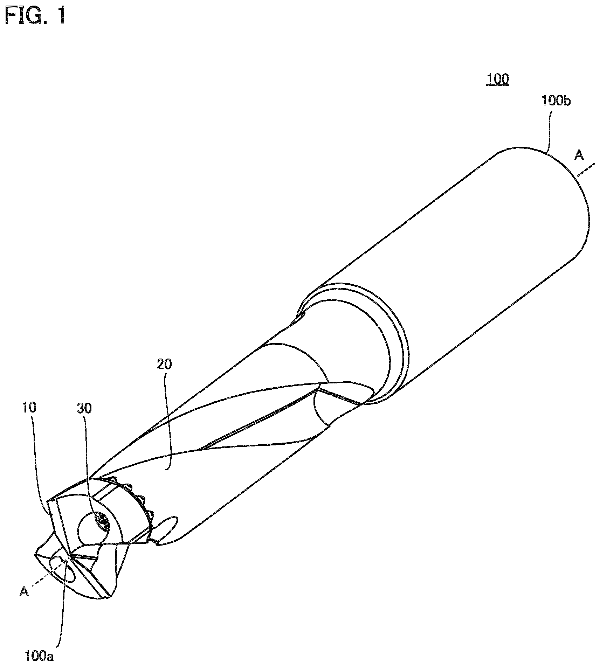

Fig. 1 is a perspective view of drill 100. As illustrated in Fig. 1, drill 100 is rotated about a center axis A. Drill 100 includes a tip 100a and a rear end 100b. Rear end 100b is an end opposite to tip 100a in the direction of center axis A. Tip 100a and rear end 100b are ends of drill 100 in the direction of center axis A.

Drill 100 includes a drill head 10, a holder 20, and a fixing member 30. Drill head 10 is located on the side of tip 100a of drill 100. Holder 20 is located on the side of rear end 100b of drill 100.

### <Detailed configuration of drill head 10>

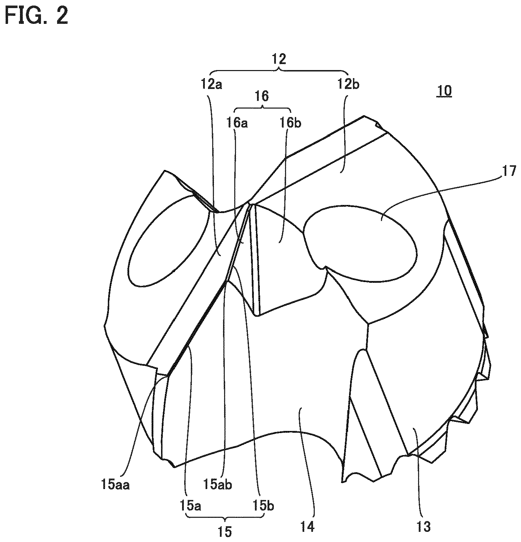

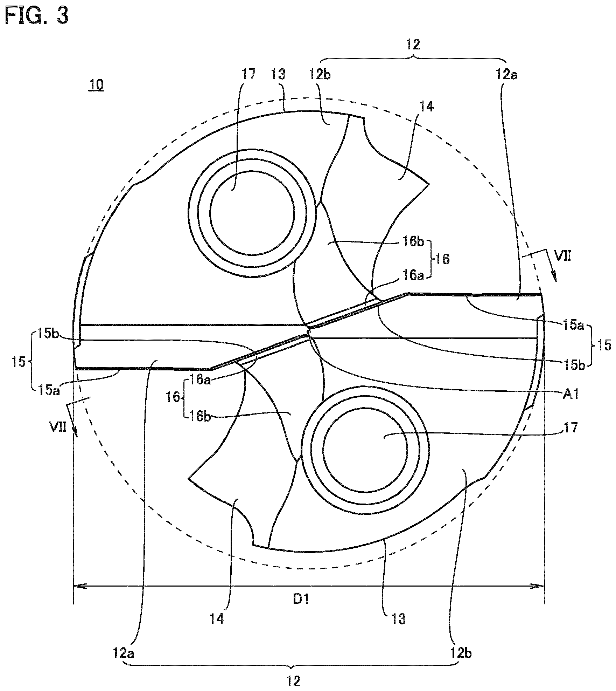

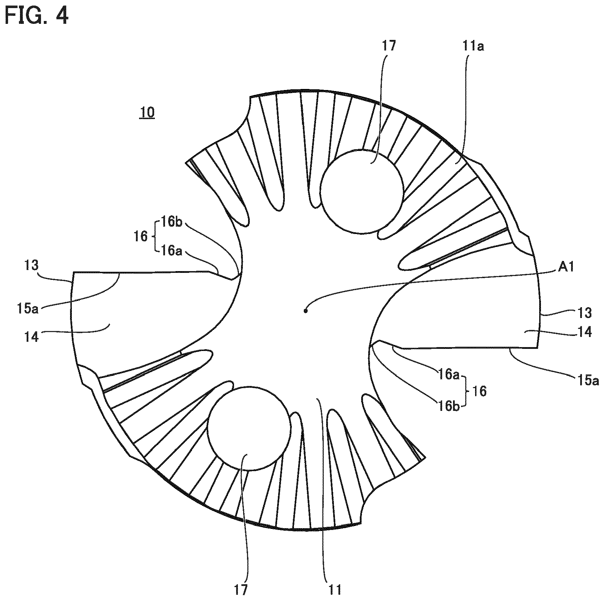

For example, drill head 10 is made of cemented carbide. Fig. 2 is a perspective view of drill head 10. Fig. 3 is a front view of drill head 10. Fig. 4 is a rear view of drill head 10. As illustrated in Figs. 2, 3, and 4, drill head 10 is rotated about a center axis A1. Center axis A1 is located on the same straight line as center axis A.

Drill head 10 includes a mounting surface 11, a tip surface 12, and an outer peripheral surface 13. Mounting surface 11 and tip surface 12 are end faces of drill head 10 in the direction of center axis A1. Mounting surface 11 faces the side of holder 20. Tip surface 12 is a surface opposite to mounting surface 11 in the direction of center axis A1. Tip surface 12 is located at tip 100a. Outer peripheral surface 13 is continuous to mounting surface 11 and tip surface 12.

A plurality of grooves 11a are formed in mounting surface 11. Mounting surface 11 is recessed toward tip surface 12 in groove 11a. Groove 11a extends from a central portion of mounting surface 11 toward outer peripheral surface 13 along the direction orthogonal to center axis A1.

In the end face view viewed from the side of tip surface 12 along the direction of center axis A1, the diameter of the circumscribed circle of drill head 10 is set to an outer diameter D1. In Fig. 3, the circumscribed circle is indicated by a dotted line. For example, outer diameter D1 is greater than or equal to 12 mm. Outer diameter D1 may be greater than or equal to 10 mm.

Two flutes 14 are formed on outer peripheral surface 13. Flute 14 is formed in a spiral shape about center axis A1 so as to reach mounting surface 11 from tip surface 12. From another point of view, flute 14 extends in a spiral shape about center axis A1 from tip surface 12 toward the side of rear end 100b. One of flutes 14 is located at a position symmetrical to the other flute 14 with respect to center axis A1 in the end face view viewed from the side of tip surface 12 along the direction of center axis A1.

Drill head 10 includes two cutting edges 15. Cutting edge 15 extends from outer peripheral surface 13 toward center axis A1 on tip surface 12. Cutting edge 15 includes a main cutting edge 15a and a thinning cutting edge 15b. Thinning cutting edge 15b is located closer to center axis A1 than main cutting edge 15a. One of cutting edges 15 is located at a position symmetrical to the other cutting edge 15 with respect to center axis A1 in the end face view viewed from the side of tip surface 12 along the direction of center axis A1.

Main cutting edges 15a includes a first end 15aa and a second end 15ab. First end 15aa is an end on the side of outer peripheral surface 13. Second end 15ab is an end opposite to first end 15aa. Main cutting edge 15a is continuous to thinning cutting edge 15b at second end 15ab. Main cutting edge 15a extends substantially linearly in the end face view viewed from the side of tip surface 12 along the direction of center axis A1. Preferably, thinning cutting edge 15b extends linearly in the end face view viewed from the side of tip surface 12 along the direction of center axis A1.

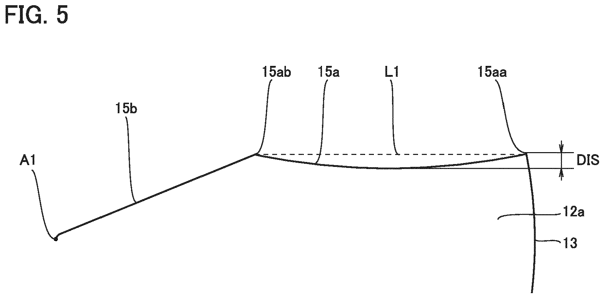

Fig. 5 is a schematic diagram illustrating a concave amount of main cutting edge 15a. Fig. 5 illustrates a shape of main cutting edge 15a when tip surface 12 is viewed in the direction from tip 100a toward rear end 100b. In Fig. 5, the direction substantially perpendicular to main cutting edge 15a is illustrated in an enlarged manner as compared with the direction substantially parallel to main cutting edge 15a. As illustrated in Fig. 5, a virtual straight line connecting first end 15aa and second end 15ab is set to a virtual straight line L1. A distance between virtual straight line L1 and main cutting edge 15a is set to a distance DIS. The maximum value of distance DIS is a concave amount of main cutting edge 15a with respect to virtual straight line L1.

The concave amount of main cutting edge 15a with respect to virtual straight line L1 is greater than or equal to -0.01 times and less than or equal to 0.02 times outer diameter D1. Preferably, the concave amount of main cutting edge 15a with respect to virtual straight line L1 is greater than or equal to 0.00 times and less than or equal to 0.01 times outer diameter D1. When main cutting edge 15a protrudes with respect to straight line L, the concave amount of main cutting edge 15a becomes a negative value. When main cutting edge 15a is recessed from straight line L, the concave amount of main cutting edge 15a becomes a positive value. The concave amount of main cutting edge 15a with respect to virtual straight line L1 in Fig. 5 is the positive value.

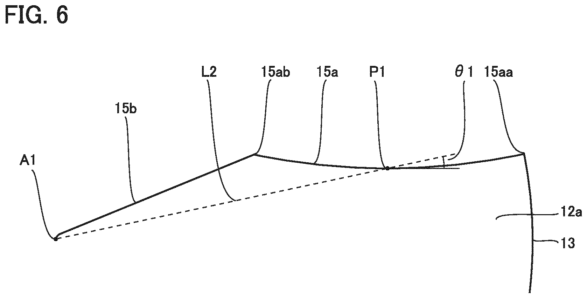

Fig. 6 is a schematic diagram illustrating a radial rake angle θ1 of main cutting edge 15a. Fig. 6 illustrates the shape of main cutting edge 15a when tip surface 12 is viewed in the direction from tip 100a toward rear end 100b. In Fig. 6, the direction substantially perpendicular to main cutting edge 15a is illustrated in an enlarged manner as compared with the direction substantially parallel to main cutting edge 15a. As illustrated in Fig. 6, a specific position on main cutting edge 15a is set to a position P1. A virtual straight line connecting center axis A1 and position P1 is set to a virtual straight line L2. An angle formed by a tangent line of main cutting edge 15a at position P1 and virtual straight line L2 is radial rake angle θ1 of main cutting edge 15a. The difference between the maximum value and the minimum value of radial rake angle θ1 of main cutting edge 15a is preferably less than or equal to 20°.

As illustrated in Fig. 3, tip surface 12 includes two first flank surfaces 12a and two second flank surfaces 12b. First flank surface 12a is continuous to cutting edge 15 (main cutting edge 15a and thinning cutting edge 15b). One of first flank surfaces 12a is located at the position symmetrical to other first flank surface 12a with respect to center axis A1. Flute 14 is continuous to main cutting edge 15a from the side opposite to first flank surface 12a. That is, main cutting edge 15a is located on the ridgeline between first flank surface 12a and flute 14. Second flank surface 12b is located on the opposite side of first flank surface 12a with flute 14 interposed therebetween. One of second flank surface 12b is located at the position symmetrical to the other second flank surface 12b with respect to center axis A1.

As illustrated in Fig. 2, drill head 10 includes a thinning surface 16. Thinning surface 16 is continuous to tip surface 12 and flute 14. Thinning surface 16 includes a thinning rake surface 16a and a thinning heel surface 16b.

Thinning rake surface 16a is continuous to thinning cutting edge 15b from the side opposite to first flank surface 12a. That is, thinning cutting edge 15b is located on the ridgeline between first flank surface 12a and thinning rake surface 16a. Thinning heel surface 16b is continuous to second flank surface 12b. As illustrated in Fig. 3, the ridgeline between thinning heel surface 16b and second flank surface 12b has an arc shape in the end face view viewed from the side of tip surface 12 along the direction of center axis A1,. The arc shape has a corresponding curvature radius when a certain arc-shaped point is determined. The arc shape may have substantially the same curvature radius with respect to all arc-shaped points. The arc shape may have different curvature radii corresponding to arc-shaped points. In the present specification, the "radius" of the arc shape means a range of values of the curvature radius corresponding to all the arc-shaped points. The radius of the arc shape is greater than or equal to 0.10 times and less than or equal to 0.30 times outer diameter D1. The radius of the arc shape is preferably greater than or equal to 0.13 times and less than or equal to 0.24 times outer diameter D1. The ridgeline between thinning heel surface 16b and second flank surface 12b may be divided by a through-hole 17. The shape of a portion of the ridgeline between thinning heel surface 16b and second flank surface 12b on the side close to center axis A1 may be an arc shape when the ridgeline between thinning heel surface 16b and second flank surface 12b is divided by through-hole 17. The radius of the arc shape is greater than or equal to 0.10 times and less than or equal to 0.30 times outer diameter D1. The radius of the arc shape is preferably greater than or equal to 0.13 times and less than or equal to 0.24 times outer diameter D1.

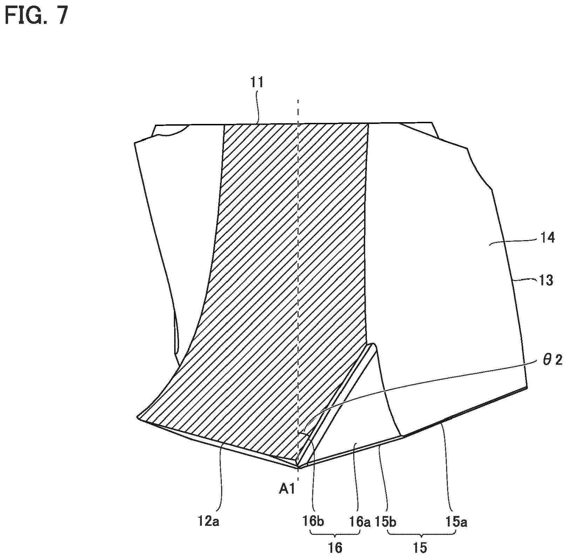

Fig. 7 is a sectional view taken along a line VII-VII in Fig. 3. Fig. 7 illustrates a section of drill head 10 parallel to thinning rake surface 16a. As illustrated in Fig. 7, an angle formed by thinning heel surface 16b and center axis A1 is set to an angle θ2. The angle θ2 is preferably greater than or equal to 28° and less than or equal to 32°.

As illustrated in Figs. 3 and 4, two through-holes 17 are made in drill head 10. Through-hole 17 penetrates drill head 10 along the direction of center axis A1. One of through-holes 17 is located at the position symmetrical to the other through-hole 17 with respect to center axis A1. An end on the side of tip surface 12 of through-hole 17 is opened in second flank surface 12b.

### <Detailed configuration of holder 20>

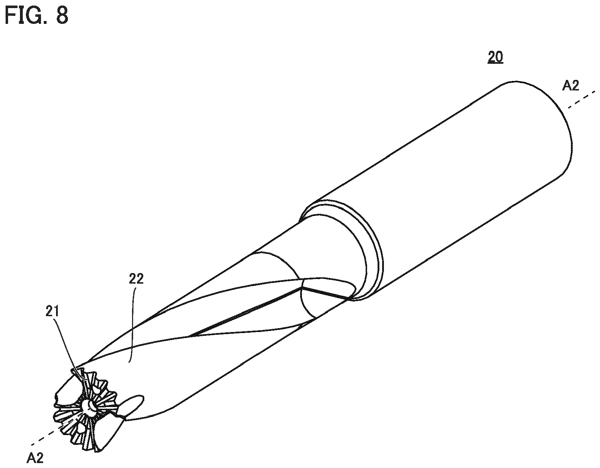

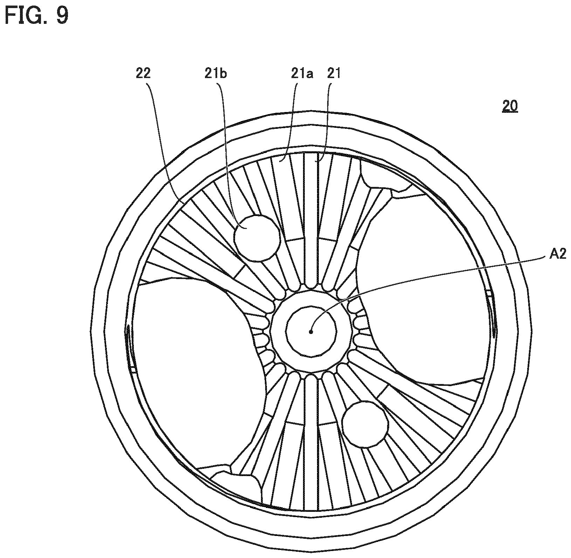

For example, holder 20 is made of steel. Fig. 8 is a perspective view of holder 20. Fig. 9 is a front view of holder 20. As illustrated in Figs. 8 and 9, holder 20 is rotated about center axis A2. Center axis A2 is located on the same straight line as center axis A1. Holder 20 includes a mounting surface 21 and an outer peripheral surface 22. Mounting surface 21 is an end face of holder 20 in the direction of center axis A2, and faces the side of drill head 10. Outer peripheral surface 22 is continuous to mounting surface 21.

A plurality of protruding strips 21a are formed on mounting surface 21. Mounting surface 21 protrudes toward the side of drill head 10 at protruding strip 21a. Protruding strip 21a extends from the central portion of mounting surface 21 toward outer peripheral surface 22 along the direction orthogonal to center axis A2. Two screw holes 21b are made in mounting surface 21. Screw hole 21b extends from mounting surface 21 toward the side of rear end 100b. One of screw holes 21b is located at the position symmetrical to the other screw hole 21b with respect to center axis A2.

Protruding strip 21a is fitted into groove 11a. In a state where protruding strip 21a is fitted into groove 11a, screw hole 21b is located at the position overlapping through-hole 17. For example, fixing member 30 is a screw. Fixing member 30 is inserted into through-hole 17 and then screwed into screw hole 21b, thereby fastening drill head 10 to holder 20. In this manner, holder 20 is attached to drill head 10 (mounting surface 11).

### (Effect of drill 100)

Effects of the drill 100 will be described below.

When cutting is performed with drill 100, the chips are generated from a work material by cutting edge 15. The chip portion generated by thinning cutting edge 15b comes into contact with thinning heel surface 16b and is curved when being moved toward flute 14. When the curvature reaches the limit, a crack is generated in the chip portion generated by thinning cutting edge 15b. The crack generated in the chip develops to the chip portion generated by main cutting edge 15a by centrifugal force of the chip, and breaks the chip.

In drill 100, main cutting edge 15a extends substantially linearly. That is, in drill 100, the concave amount of main cutting edge 15a with respect to virtual straight line L1 is greater than or equal to -0.01 times and less than or equal to 0.02 times outer diameter D1. Consequently, in drill 100, the chip portion generated by main cutting edge 15a has small distortion, and the crack generated in the chip portion generated by thinning cutting edge 15b easily develops to the chip portion generated by main cutting edge 15a.

When the ridgeline between thinning heel surface 16b and second flank surface 12b is linear in the end face view viewed from the side of tip surface 12 along the direction of center axis A1, the chip portion generated by thinning cutting edge 15b is hardly curved by thinning heel surface 16b, so that the crack is hardly generated in the chip portion generated by thinning cutting edge 15b.

However, in drill 100, the ridgeline between thinning heel surface 16b and second flank surface 12b has an arc shape having a radius of greater than or equal to 0.10 times and less than or equal to 0.30 times outer diameter D1. Consequently, in drill 100, the chip portion generated by thinning cutting edge 15b is easily curved by thinning heel surface 16b, so that the crack is easily generated in the chip portion generated by thinning cutting edge 15b.

As described above, in drill 100, the crack is easily generated in the chip portion generated by thinning cutting edge 15b, and the generated crack easily develops to the chip portion generated by main cutting edge 15a, so that the chips are easy to divide.

When the concave amount of main cutting edge 15a with respect to virtual straight line L1 is greater than or equal to 0.00 times and less than or equal to 0.01 times outer diameter D1, the chips are more easily divided. In this case, stability of cutting can be enhanced. When the radius of the ridgeline between arc-shaped thinning heel surface 16b and second flank surface 12b is greater than or equal to 0.13 times and less than or equal to 0.24 times outer diameter D1, the chips are more easily divided.

In the case of large angle θ2, the chips stagnate within the thinning, so that there is a possibility that the crack is hardly generated in the chip portion generated by thinning cutting edge 15b. On the other hand, in the case of small angle θ2, the chip portion generated by thinning cutting edge 15b is hardly curved due to the contact with thinning heel surface 16b (the crack is hardly generated). Consequently, the chips are more easily divided by optimizing the range of angle θ2 (more specifically, angle θ2 is set to greater than or equal to 28° and less than or equal to 32°).

When thinning cutting edge 15b extends linearly in the end face view viewed from the side of tip surface 12 along the direction of center axis A1, the distortion of the chip portion generated by thinning cutting edge 15b is reduced, and the generated crack easily develops in the chip portion generated by thinning cutting edge 15b. Accordingly, in this case, the chips are more easily divided.

### <Cutting test>

A first cutting test, a second cutting test, and a third cutting test were performed in order to check the effect of drill 100.

In the first cutting test, drills 100 of sample numbers 1-1 to 1-7 were used. In the first cutting test, the radius of the ridgeline between arc-shaped thinning heel surface 16b and second flank surface 12b was set to 0.20 times outer diameter D1, and angle θ2 was set to 30°. In the first cutting test, the concave amount of main cutting edge 15a with respect to virtual straight line L1 was changed within a range of greater than or equal to -0.01 times and less than or equal to 0.06 times outer diameter D1.

### [Table 1]

**Table 1**

| Sample number | 1-1 | 1-2 | 1-3 | 1-4 | 1-5 | 1-6 | 1-7 |
|---|---|---|---|---|---|---|---|
| Concave amount of main cutting edge 15a/outer diameter D1 with respect to virtual straight line L1 | -0.01 | 0.00 | 0.01 | 0.02 | 0.03 | 0.04 | 0.06 |
| Chip division ratio (%) | 53 | 80 | 77 | 60 | 35 | 24 | 20 |

In the second cutting test, drills 100 of sample numbers 2-1 to 2-8 were used. In the second cutting test, the concave amount of main cutting edge 15a with respect to virtual straight line L1 was set to 0.00 times outer diameter D1, and angle θ2 was set to 30°. In the second cutting test, the radius of the ridgeline between arc-shaped thinning heel surface 16b and second flank surface 12b was changed within a range of greater than or equal to 0.10 times and less than or equal to 0.40 times outer diameter D1.

### [Table 2]

**Table 2**

| Sample number | 2-1 | 2-2 | 2-3 | 2-4 | 2-5 | 2-6 | 2-7 | 2-8 |
|---|---|---|---|---|---|---|---|---|
| Radius/outer diameter D1 of ridgeline between arc-shaped thinning heel surface 16b and second flank surface 12b | 0.10 | 0.13 | 0.15 | 0.20 | 0.24 | 0.25 | 0.30 | 0.40 |
| Chip division ratio (%) | 70 | 80 | 82 | 83 | 80 | 71 | 51 | 30 |

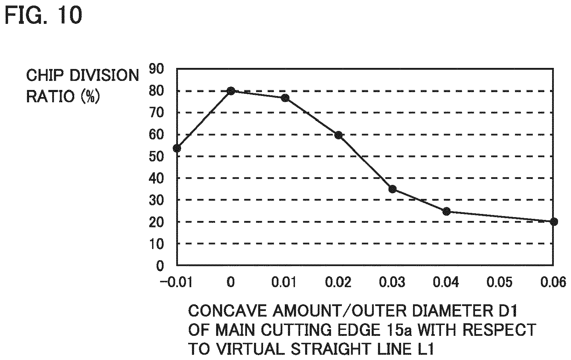

Fig. 10 is a graph illustrating a result of the first cutting test. A horizontal axis in Fig. 10 is a value obtained by dividing the concave amount of main cutting edge 15a with respect to virtual straight line L1 by outer diameter D1, and a vertical axis in Fig. 10 is the chip division ratio (unit: percent). The chip division ratio is a value obtained by dividing a weight of the chip divided by one curl by a total weight of the generated chips.

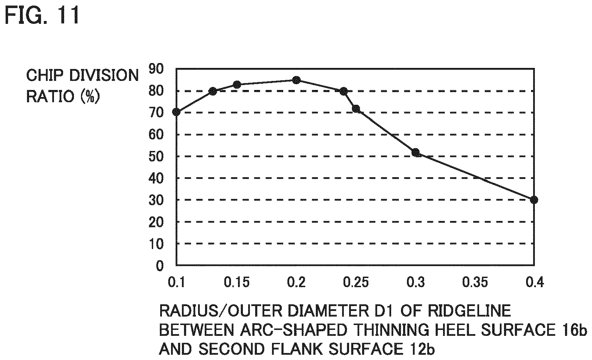

Fig. 11 is a graph illustrating a result of the second cutting test. The horizontal axis in Fig. 11 is a value obtained by dividing the radius of the ridgeline between arc-shaped thinning heel surface 16b and second flank surface 12b by outer diameter D1, and the vertical axis in Fig. 11 is the chip division ratio.

As illustrated in Fig. 10, when the concave amount of main cutting edge 15a with respect to virtual straight line L1 fell within the range of greater than or equal to - 0.01 times and less than or equal to 0.02 times outer diameter D1, the chip division ratio was greater than or equal to 50%. On the other hand, when the concave amount of main cutting edge 15a with respect to virtual straight line L1 fell within the range of greater than or equal to 0.03 times, the chip division ratio was less than 50%.

As illustrated in Fig. 11, when the radius of the ridgeline between arc-shaped thinning heel surface 16b and second flank surface 12b fell within the range of greater than or equal to 0.10 times and less than or equal to 0.30 times outer diameter D1, the chip division ratio was greater than or equal to 50%. On the other hand, when the radius of the ridgeline between arc-shaped thinning heel surface 16b and second flank surface 12b fell within the range of greater than or equal to 0.35 times outer diameter D1, the chip division ratio was less than 50%.

From the above comparison, it has been experimentally found that the chips are easily divided when the concave amount of main cutting edge 15a with respect to virtual straight line L1 falls within the range of greater than or equal to -0.01 times and less than or equal to 0.02 times outer diameter D1, and when the radius of the ridgeline between arc-shaped thinning heel surface 16b and second flank surface 12b falls within the range of greater than or equal to 0.10 times and less than or equal to 0.30 times outer diameter D1.

When the concave amount of main cutting edge 15a with respect to virtual straight line L1 fell within the range of greater than or equal to 0.00 times and less than or equal to 0.01 times outer diameter D1, the chip division ratio became greater than or equal to 77%. From this, it has been experimentally found that the chips are further easily divided when the concave amount of main cutting edge 15a with respect to virtual straight line L1 fell within the range of greater than or equal to 0.00 times and less than or equal to 0.01 times outer diameter D1.

When the radius of the ridgeline between arc-shaped thinning heel surface 16b and second flank surface 12b fell within the range of greater than or equal to 0.13 times and less than or equal to 0.24 times outer diameter D1, the chip division ratio became greater than or equal to 80%. From this, it has been experimentally found that the chips are further easily divided when the radius of the ridgeline between arc-shaped thinning heel surface 16b and second flank surface 12b fell within the range of greater than or equal to 0.13 times and less than or equal to 0.24 times outer diameter D1.

In the third cutting test, drills 100 of sample numbers 3-1 to 3-7 were used. In the third cutting test, the concave amount of main cutting edge 15a with respect to virtual straight line L1 was set to 0.00 times outer diameter D1, and the radius of the ridgeline between arcuate thinning heel surface 16b and second flank surface 12b was set to 0.20 times outer diameter D1. In the third cutting test, angle θ2 was changed within the range of greater than or equal to 25° and less than or equal to 45°.

### [Table 3]

**Table 3**

| Sample number | 3-1 | 3-2 | 3-3 | 3-4 | 3-5 | 3-6 | 3-7 |
|---|---|---|---|---|---|---|---|
| Angle θ2 (°) | 25 | 28 | 30 | 32 | 34 | 38 | 45 |
| Chip division ratio (%) | 65 | 82 | 86 | 83 | 78 | 63 | 20 |

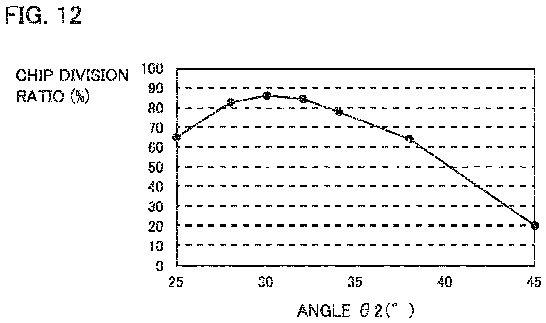

Fig. 12 is a graph illustrating a result of the third cutting test. The horizontal axis in Fig. 12 represents angle θ2 (unit: °). In Fig. 12, the vertical axis represents the chip division ratio (unit: percent). As illustrated in Fig. 12, when angle θ2 fell within the range of greater than or equal to 28° and less than or equal to 32°, the chip division ratio became greater than or equal to 82%. From this, it has been experimentally found that the chips were more easily divided when angle θ2 fell within the range of greater than or equal to 28° and less than or equal to 32°.

### (Modification)

Although the example in which drill 100 is the cutting edge exchangeable drill has been described above, drill 100 may be a solid drill. That is, drill 100 may not be divided into drill head 10 and holder 20.

It should be understood that the embodiment disclosed herein is illustrative in all respects and are not restrictive. The scope of the present invention is defined not by the embodiment but by the claims, and is intended to include meanings equivalent to the claims and all modifications within the scope.

### REFERENCE SIGNS LIST

10: drill head, 11: mounting surface, 11a: groove, 12: tip surface, 12a: first flank surface, 12b: second flank surface, 13: outer peripheral surface, 14: flute, 15: cutting edge, 15a: main cutting edge, 15aa: first end, 15ab: second end, 15b: thinning cutting edge, 16: thinning surface, 16a: thinning rake surface, 16b: thinning heel surface, 17: through-hole, 20: holder, 21: mounting surface, 21a: protruding strip, 21b: screw hole, 22: outer peripheral surface, 30: fixing member, 100: drill, 100a: distal end, 100b: rear end, A, A1, A2: center axis, D1, D2: outer diameter, DIS: distance, L: straight line, L1, L2: virtual straight line, P1: position, θ1: radial rake angle, θ2: angle

## Claims

1. A drill head rotated about a center axis, the drill head comprising:
a mounting surface that is an end face in a direction of the center axis;
a tip surface that is an opposite surface to the mounting surface in the direction of the center axis;
an outer peripheral surface continuous to the mounting surface and the tip surface;
a cutting edge extending from the outer peripheral surface toward the center axis in the tip surface;
a flute that is formed on the outer peripheral surface and extends spirally around the center axis from the tip surface to the mounting surface; and
a thinning surface continuous to the tip surface and the flute,
wherein the tip surface includes:
a first flank surface continuous to the cutting edge; and
a second flank surface located on a side opposite to the first flank surface with the flute interposed therebetween,
the cutting edge includes:
a main cutting edge continuous to the outer peripheral surface; and
a thinning cutting edge that is continuous to the main cutting edge and is located closer to the center axis than the main cutting edge,
the main cutting edge includes:
a first end that is an end on a side of the outer peripheral surface; and
a second end that is an end on a side of the thinning cutting edge,
the thinning surface includes:
a thinning rake surface continuous to the thinning cutting edge from a side opposite to the first flank surface; and
a thinning heel surface continuous to the second flank surface,
a concave amount of the main cutting edge with respect to a virtual straight line connecting the first end and the second end is greater than or equal to -0.01 times and less than or equal to 0.02 times a diameter of a circumscribed circle of the drill head in an end face view viewed from a tip surface side along the direction of the center axis, and
a ridgeline between the thinning heel surface and the second flank surface has an arc shape having a radius of greater than or equal to 0.10 times and less than or equal to 0.30 times the diameter in the end face view.

2. The drill head according to claim 1, wherein the concave amount is greater than or equal to 0.00 times and less than or equal to 0.01 times the diameter in the end face view.

3. The drill head according to claim 1 or 2, wherein the radius is greater than or equal to 0.13 times and less than or equal to 0.24 times the diameter.

4. The drill head according to any one of claims 1 to 3, wherein a difference between a maximum value and a minimum value of a radial rake angle of the main cutting edge is less than or equal to 20°.

5. The drill head according to any one of claims 1 to 4, wherein an angle between a direction of the center axis and the thinning heel surface is greater than or equal to 28° and less than or equal to 32°.

6. The drill head according to any one of claims 1 to 5, wherein the thinning cutting edge extends linearly in the end face view.

7. A tip exchangeable drill comprising:
the drill head according to any one of claims 1 to 6; and
a holder attached to the mounting surface.

8. A drill rotated about a center axis, the drill comprising:
a tip and a rear end that are ends in a direction of the center axis;
a tip surface that is located at the tip;
an outer peripheral surface continuous to the tip surface;
a cutting edge extending from the outer peripheral surface toward the center axis in the tip surface;
a flute that is formed on the outer peripheral surface and extends spirally around the center axis from the tip surface toward a rear end surface; and
a thinning surface continuous to the tip surface and the flute,
wherein the tip surface includes:
a first flank surface continuous to the cutting edge; and
a second flank surface located on a side opposite to the first flank surface with the flute interposed therebetween,
the cutting edge includes:
a main cutting edge continuous to the outer peripheral surface; and
a thinning cutting edge that is continuous to the main cutting edge and is located closer to the center axis than the main cutting edge,
the main cutting edge includes:
a first end that is an end on a side of the outer peripheral surface; and
a second end that is an end on a side of the thinning cutting edge,
the thinning surface includes:
a thinning rake surface continuous to the thinning cutting edge from a side opposite to the first flank surface; and
a thinning heel surface continuous to the second flank surface,
a concave amount of the main cutting edge with respect to a virtual straight line connecting the first end and the second end is greater than or equal to -0.01 times and less than or equal to 0.02 times a diameter of a circumscribed circle of the drill in an end face view viewed from a tip surface side along the direction of the center axis, and
a ridgeline between the thinning heel surface and the second flank surface has an arc shape having a radius of greater than or equal to 0.10 times and less than or equal to 0.30 times the diameter in the end face view.
